# EUROPÄISCHE PATENTANMELDUNG

(11) **EP 0 891 989 A1**
(43) Veröffentlichungstag der Anmeldung: **20.01.1999**
(21) Anmeldenummer: 98112618.8
(22) Anmeldetag: 08.07.1998
(51) Int. Cl.: C08F 8/50, C08F 291/00, C08G 85/00

(54) **Modifizierte, Methylensequenzen enthaltende Polymere**

(30) Priorität: 17.07.1997 DE 19730629
(71) Anmelder: PCD Polymere AG, 2323 Schwechat-Mannswörth (AT)
(72) Erfinder: Rätzsch, Manfred, Prof. Dr., 4202 Kirchschlag (AT); Panzer, Ulf, Dr., 4320 Perg (AT); Hesse, Achim, Dr., 4021 Linz (AT); Reichelt, Norbert, Dr., 4501 Neuhofen (AT)
(74) Vertreter: Schinke, Herbert, Dr. Dr., Patentanwaltskanzlei

(57) **Zusammenfassung**

Modifizierte, Methylensequenzen enthaltende Polymere ohne störende Anteile an Nebenprodukten werden nach einem Modifizierungsverfahren aus Methylensequenzen enthaltenden thermoplastischen Polymeren, thermisch zerfallenden Radikalbildnern und gegebenenfalls ethylenisch ungesättigten Monomeren und/oder Zusatzstoffen erhalten, bei dem vor Austrag der modifizierten Polymeren aus dem kontinuierlichen Kneter oder kontinuierlichen Mischer 0,01 bis 3,0 Masse%, bezogen auf die eingesetzten Polymere, an 3-Arylbenzofuranonderivaten als Radikalfänger zugesetzt worden sind.

Die modifizierten, Methylensequenzen enthaltenden Polymeren sowie Mischungen mit nichtmodifizierten, thermoplastischen, Methylensequenzen enthaltenden Polymeren sind zur Herstellung von Folien, Fasern, Platten, Beschichtungen, Rohren, Hohlkörpern, Schaumstoffen und Formteilen geeignet.

## Beschreibung

Die Erfindung betrifft modifizierte, Methylensequenzen enthaltenden Polymere ohne störende Anteile an Nebenprodukten, die für die Erzeugung von Folien, Fasern, Platten, Beschichtungen, Rohren, Hohlkörpern, Schaumstoffen und Formteilen geeignet sind, sowie Verfahren zu ihrer Herstellung,.

Bekannte, Methylensequenzen enthaltende thermoplastische Polymere sind Polyolefine, Polyvinylverbindungen, Polyester, Polyamide, Polyether und Polyurethane.

Bekannte Modifizierungsverfahren von Methylensequenzen enthaltenden, thermoplastischen Polymeren sind die Umsetzung mit thermisch zerfallenden Radikalbildnern und/oder ethylenisch ungesättigten Monomeren unter Bildung von Pfropfcopolymeren sowie von vernetzten, abgebauten oder strukturisomerisierten Produkten (Xanthos, M., Reactive Extrusion, Carl-Hanser-Verlag München 1990).

Von Nachteil bei der Modifizierung von Methylensequenzen enthaltenden thermoplastischen Polymeren sind die Folgereaktionen unter Bildung unerwünschter Nebenprodukte, die nach Abschluß der Modifizierungsreaktion durch Kopplungs- und Übertragungsreaktionen von Radikalstellen an Polymeren, nicht umgesetzten thermisch zerfallenden Radikalbildnern und Monomeren erfolgen.

Bekannt ist, die Bildung unerwünschter Nebenprodukte nach Abschluß der Modifizierungsreaktion durch thermische Desaktivierung der Radikalstellen an Polymeren, nicht umgesetzten thermisch zerfallenden Radikalbildnern und Monomeren herabzusetzen [ EP 384 431; EP 439 079]. Dieses Verfahren schließt jedoch eine Bildung von Nebenprodukten nicht vollständig aus, sondern führt in der thermischen Desaktivierungsstufe zu Kopplungsreaktionen.

Ein bekanntes Verfahren zur Herabsetzung des Anteils an unerwünschten Nebenprodukten bei Modifizierungsreaktionen von Polyolefinen mit ungesättigten Monomeren in der Schmelze besteht ebenfalls darin, bei der Umsetzung N,N'-disubstituierte Amine, N,N'-disubstituierte Aminoxide, Alkyl- und Arylphosphite, organische Phosphoramide, Arylphosphinoxide oder heterocyclische Disulfide zuzusetzen (US 4 506 056).

Weiterhin ist bekannt, bei Modifizierungsreaktionen zur Verhinderung der Bildung unerwünschter Nebenprodukte stabile Radikale einzusetzen, diese haben jedoch nur einen regulativen Einfluß auf die Kettenlänge [WO 96 24620; US 5 322 912; US 5 401 804].

Bekannt ist ebenfalls, bei Modifizierungsreaktionen durch Umsetzungen mit ethylenisch ungesättigten Monomeren auf den Einsatz von thermisch zerfallenden Radikalbildnern zu verzichten, um Nebenreaktionen einzuschränken [ EP 574 796; EP 574 801]. Von Nachteil sind dabei jedoch die geringen Umsätze, wenn hohe Modifizierungsgrade erzielt werden sollen.

Bekannt ist weiterhin, die Bildung unerwünschter Nebenprodukte nach Abschluß der Modifizierungsreaktion durch Desaktivierung der Radikalstellen an Polymeren, nicht umgesetzten thermisch zerfallenden Radikalbildnern und Monomeren durch Antioxidantien vom Typ 2-tert.Butyl-4,6-dimethylphenol, 2,6-Di-tert.butyl-4-methylphenol, 2,6-Di-tert.butyl-4-isoamylphenol oder 2,6,-Di-tert.butyl-4-ethylphenol einzuschränken [US 42 21 699].

Diese gehinderten Phenole wirken jedoch unselektiv und führen zu keiner spezifischen Radikaldesaktivierung bei Modifizierungsreaktionen von Polymeren in der Schmelze oder in fester Phase.

Die Aufgabe der vorliegenden Erfindung bestand darin, modifizierte, Methylensequenzen enthaltende Polymere zu entwickeln, die frei von störenden Anteilen an Nebenprodukten sind und die zur Herstellung von Folien, Fasern, Platten, Beschichtungen, Rohren, Hohlkörpern, Schaumstoffen und Formteilen geeignet sind.

Überraschenderweise wurde gefunden, daß bei Modifizierungsreaktionen von thermoplastischen, Methylensequenzen enthaltenden Polymeren der Zusatz von 3-Aryl-benzofuran-2-onen die Bildung von störenden Anteilen an Nebenprodukten verhindert.

Die erfindungsgemäße Aufgabe wurde durch modifizierte, Methylensequenzen enthaltende Polymere ohne störende Anteile an Nebenprodukten, die nach einem Modifizierungsverfahren aus
a) Methylensequenzen enthaltenden thermoplastischen Polymeren,
b) 0,005 bis 2,0 Masse%, bezogen auf die Methylensequenzen enthaltenden thermoplastischen Polymere, an Acylperoxiden, Alkylperoxiden, Hydroperoxiden, Peroxycarbonaten, Perestern, Ketonperoxiden, Peroxiketalen und/oder Azoverbindungen als thermisch zerfallende Radikalbildner,
c) gegebenenfalls 0,005 bis 50 Masse%, bezogen auf die Methylensequenzen enthaltenden thermoplastischen Polymeren, an ethylenisch ungesättigten Monomeren
d) und gegebenenfalls 0,01 bis 40 Masse%, bezogen auf die Methylensequenzen enthaltenden thermoplastischen Polymeren, an Zusatzstoffen
   hergestellt worden sind, gelöst, wobei erfindungsgemäß nach der Modifizierung der Methylensequenzen enthaltenden Polymeren in kontinuierlichen Knetern oder kontinuierlichen Mischern vor dem Austrag aus den kontinuierlichen Knetern oder kontinuierlichen Mischern 0,01 bis 3,0 Masse%, bezogen auf die eingesetzten Polymere, an 3-Arylbenzofuranonderivaten als Radikalfänger zugesetzt worden sind.

Erfindungsgemäß sind die Methylensequenzen enthaltenden thermoplastischen Polymere Polyolefine, Polyvinylverbindungen, Polyvinylidenverbindungen, Polyester, Polyamide, Polyether und/ oder Polyurethane.

Bevorzugte Polyolefine sind Homo- und/oder Copolymere von α-Olefinen mit 2 bis 18 C-Atomen, insbesondere lineare und/oder verzweigte Polyethylen- Homo- und/oder -Copolymere, Cycloolefin-Ethylen-Copolymere, Polypropylen-Homopolymere, statistische Propylen-Copolymere, Propylen-Blockcopolymere, statistische Propylen - Blockcopolymere, elastomere Polypropylene, nichtisotaktische Polypropylene, isotaktisches Polybuten-1 und/oder 4-Methylpenten-1- Homo- und/ oder -Copolymere.

Beispiele für Polyvinylverbindungen und Polyvinylidenverbindungen sind Polyvinylacetat, Polyvinylchlorid, Polyvinylidenchlorid, Polyvinylbenzen, Polymethylmethacrylat und Polyacrylnitril.

Beispiele für Polyester sind Polyethylenterephthalat und Polybutylenterephthalat.

Beispiele für Polyamide sind Polyamid-4; Polyamid-6; Polyamid-6,6; Polyamid-6,10; Polyamid-11 und Polyamid-12.

Beispiele für Polyether sind Polyformaldehyd, Polyethylenoxid und Polypropylenoxid.

Als thermisch zerfallende Radikalbildner werden für die modifizierten, Methylensequenzen enthaltenden Polymere Acylperoxide, Alkylperoxide, Hydroperoxide, Peroxycarbonate, Perester, Ketonperoxide, Peroxiketale und/oder Azoverbindungen eingesetzt.

Beispiele für die eingesetzten Acylperoxide sind Benzoylperoxid, Chlorbenzoylperoxid, Methoxybenzoylperoxid, Methylbenzoylperoxid, Nitrobenzoylperoxid, Acetylbenzoylperoxid, Lauroylperoxid oder Succinoylperoxid.

Beispiele für die eingesetzten Alkylperoxide sind Allyl-tert.butylperoxid, 2,2-Bis-(tert.butylperoxybutan), 1,1 -Bis-(tert.butylperoxi-)-3,3,5-trimethylcyclohexan, Diisopropylaminomethyl-tert.amylperoxid, Dimethylaminomethyl-tert.amylperoxid, Diethylaminomethyl-tert.butylperoxid, Dimethylaminomethyl-tert.butylperoxid, 1.1 -Di-(tert. amylperoxi)cyclohexan, tert. Amylperoxid, tert.Butylcumylperoxid, tert.Butylperoxid und 1-Hydroxybutyl-n-butylperoxid.

Beispiele für die eingesetzten Hydroperoxide sind Decalinhydroperoxid und Tetralinhydroperoxid.

Beispiele für die eingesetzten Perester und Peroxicarbonate sind Butylperacetat, Cumylperacetat, Cumylperpropionat, Cyclohexylperacetat, Di-tert. butylperadipat, Ditert.butylperazelat, Di-tert.butylperglutarat, Di-tert.butylperphthalat, Di-tert.butylpersebazat, 4-Nitrocumylperpropionat, 1 -Phenylethylperbenzoat, Phenylethylnitroperbenzoat, tert.Butyl-bicyclo-(2,2,1 )heptanpercarboxylat, tert.Butyl-4-carbomethoxyperbutyrat, tert. Butylcyclobutanpercarborylat, tert.Butylcyclohexylperoxycarboxylat, tert. Butylcyclopentylpercarboxylat, tert. Butylcyclopropanpercarboxylat, tert.Butyldimethylpercinnamat, tert.Butyl-2-(2,2-diphenylvinyl)perbenzoat, tert.Butyl4-methoryperbenzoat, tert. Butylperbenzoat, tert. Butylcarboxicyclohexan, tert. Butylpernaphthoat, tert. Butylperoxiisopropylcarbonat, tert. Butylpertoluat, tert. Butyl-1-phenylcyclopropylpercarboxylat, tert. Butyl-2-propylperpenten-2-oat, tert. Butyl-1 - methylcypropylpercarboxylat, tert. Butyl-4-nitrophenylperacetat, tert. Butylnitrophenylperoxycarbamat, tert. Butyl-N-succinimidopercarboxylat, tert. Butylpercrotonat, tert. Butylpermaleinsäure, tert. Butylpermethacrylat, tert. Butylperoctoat, tert. Butylperoxyisopropylcarbonat, tert. Butylperisobutyrat, tert. Butylperacrylat und tert. Butylperpropionat.

Beispiele für die eingesetzten Ketonperoxide sind Methylethylketonhydroperoxid und Diethylketonhydroperoxid.

Peroxiketale sind 1.1 -Di-tert.butylperoxy-3,3,5-trimethylcyclohexan und 1.1 -Di-tert.butylperoxy-3,3,5-dimethylethylcyclohexan.

Beispiele für die eingesetzten Azoverbindungen sind 2-Cyano-2-propylazoformamid, 2,2'-Azo-bis-2-methylpropionitril, 1,1'-Azo-bis-cyclopentannitril, 1,1'-Azo.bis-cyclohe-xannitril, 2,2'-Azo-bis-cyclohexylpropionitril; 2,2'-Azo-bis-methyl-2-methylpropionat und Azo-bis-(N,N'-diethylenisobutyramidin).

Die ethylenisch ungesättigten Monomere sind bevorzugt 0,01 bis 50 Masse%, bezogen auf die eingesetzten Polymere, an monofunktionell ethylenisch ungesättigten Monomeren und/oder 0,005 bis 5 Masse%, bezogen auf die eingesetzten Polymere, an mehrfunktionell ethylenisch ungesättigten Monomeren.

Die monofunktionell ethylenisch ungesättigten Monomere sind insbesondere:
- Acrylsäure,
- Acrylnitril,
- C₄-C₂₁-Acrylsäureester wie Methylacrylat, Benzylacrylat oder Stearylacrylat,
- Methacrylsäure,
- Methacrylnitril,
- C₅-C₂₂-Methacrylsäureester wie Methylmethacrylat oder Octylmethacrylat,
- Styren,
- C₈-C₂₀-Styrenderivate wie α-Methylstyren, Chlorstyren, Dimethylstyren, Isopropenylstyren oder Methylstyren,
- ungesättigte C₄-C₂₁-Dicarbonsäureanhydride wie Fumarsäureanhydrid, Itakonsäureanhydrid, Maleinsäureanhydrid, Bicycloheptendicarbonsäureanhydrid, Citraconsäureanhydrid oder Cyclohexendicarbonsäureanhydrid,
- C₅-C₁₄-Vinylsilane wie Vinyltriethoxysilan, Vinyltriisopropoxysilan, Vinyltrimethoxysilan oder Aminoethyldiethoxyvinylsilan,
- C₆-C₁₅-Acrylatsilane wie Methacryloxypropyltrimethoxysilan, Methacryloxypropyldimethylethoxysilan, Methacryloxypropylmethyldiethoxysilan, Methacryloxypropyltriethoxysilan oder Methacryloxypropyltrimethoxysilan,
- Vinylpyridin,
- Vinyloxazolin,
- Isopropenyloxazolin,
- Vinylpyrrolidon,
- Amino-C₁-C₈-alkylacrylate wie Aminoethylacrylat, Aminoisobutylacrylat oder Aminoethylhexylacrylat,
- Amino-C₁-C₈-alkylmethacrylate wie Aminoethylmethacrylat, Aminoisobutylmethacrylat oder Aminoethylhexylmethacrylat,
   C₃-C₂₀-Vinylether wie Vinylmethylether, Vinylisobutylether, Hydroxyethylvinylether, Hydroxybutylvinylether oder Vinylstearylether,
- Hydroxy-C₁-C₈-alkylacrylate wie Hydroxyethylacrylat, Hydroxyisobutylacrylat oder Hydroxyethylhexylacrylat,
- Hydroxy-C₁-C₈-alkylmethacrylate wie Hydroxyethylmethacrylat, Hydroxyisobutylmethacrylat oder Hydroxyethylhexylmethacrylat,
- α-Methylstyren und Derivate des α-Methylstyrens,
- Vinylbiphenyl und Derivate des Vinylbiphenyls,
- C₂-C₂₀ - α-Olefine wie Ethylen, Propylen, Buten-1, Hexen-1, Octen-1, Hepten-1, Penten-1, 3-Methylbuten-1, 4-Methylpenten-1, 3-Methyl-penten-1, Methylethylpenten-1, Ethylpenten-1, Ethylhexen-1 oder 5,6-Dimethylnorbornen.

Die mehrfunktionell ethylenisch ungesättigten Monomeren sind insbesondere:
- C₇- bis C₁₀- Divinylverbindungen wie Divinylanilin, Diethylenglycoldivinylether, Divinylpentan oder Divinylpropan,
- C₅- bis C₉- Allylverbindungen wie Allylacrylat, Allylmethacrylat, Allylmethylmaleat, Allylcyanurat oder Allylvinylether;
- C₄- bis C₁₀- Diene wie Butadien, Butadien-1-carbonsäure, Chloropren, Cyclohexadien-1 ,3, Cyclohexadien-1 ,5, Cyclopentadien, 2,3-Dimethylbutadien, 1 -Ethoxybutadien, 1,4-Hexadien, 1,6-Hexadien oder 1,4-Pentadien,
- C₈-C₁₄-Diacrylate wie Ethylenglycoldiacrylat, Butylenglycoldiacrylat, Pentandioldiacrylat, Trimethylenglycoldiacrylat oder Hexandioldiacrylat,
- C₉-C₁₅-Dimethacrylate wie Ethylenglycoldimethacrylat, Butylenglycoldimethacrylat, Pentandioldimethacrylat oder Trimethylenglycoldimethacrylat,
- C₁₂-C₁₇-Polyacrylate wie Glycerintriacrylat, Trimethylolpropantriacrylat oder Pentaerythrittetraacrylat,
- C₁₅-C₂₁- Polymethacrylate wie Glycerintrimethacrylat, Trimethylolpropantrimethacrylat oder Pentaerythrittetramethacrylat,
- C₉-C₂₂-Bismaleinimide wie Bismaleimidobenzen, Bismaleimidodiphenylmethan oder Bismaleimidotetramethyldiphenylmethan,
- C₇- bis C₁₆-Diallylverbindungen wie Diallylcyanurat, Diallylphthalat, Diallylcyanoethylisocyanurat, Diallylcyanamid oder Diallylmaleinat,
- C₉- bis C₁₂- Triallylverbindungen wie Triallylcitrat, Triallylcyanurat oder Triallylisocyanurat,
- Makromere auf Basis von Oligobutadienen, Polysiloxanen oder Polyethern mit Acryl-, Allyl-, Isocyanat-, Oxazolin- oder Vinylendgruppen.

Die in den modifizierten, Methylensequenzen enthaltenden Polymeren enthaltenen Zusatzstoffe sind bevorzugt 0,01 bis 2,5 Masse% Stabilisatoren, 0,05 bis 2,0 Masse% Nukleierungsmittel, 0,1 bis 1 Masse% Antistatika, 0,2 bis 3 Masse% Pigmente, 3 bis 40 Masse% Füllstoffe, 1 bis 20 Masse% Flammschutzmittel, 3 bis 40 Masse% Verstärkerstoffe und/oder 0,01 bis 5 Masse%, jeweils bezogen auf die eingesetzten Polymere, Verarbeitungshilfsmittel.

Als Stabilisatoren können in den modifizierten, Methylensequenzen enthaltenden Polymeren gegebenenfalls bevorzugt Mischungen aus 0,01 bis 0,6 Masse% phenolischen Antioxidantien, 0,01 bis 0,6 Masse% Verarbeitungsstabilisatoren auf Basis von Phosphiten, 0,01 bis 0,6 Masse% Hochtemperaturstabilisatoren auf Basis von Disulfiden und Thioäthern und/oder 0,01 bis 0,8 Masse% sterisch gehinderten Aminen (HALS), jeweils bezogen auf die Methylensequenzen enthaltenden thermoplastischen Polymeren, enthalten sein.

Geeignete phenolische Antioxidantien sind 2-tert.Butyl-4,6-dimethylphenol, 2,6-Di-tert.butyl-4-methylphenol, 2,6-Di-tert.butyl-4-isoamylphenol, 2,6,-Di-tert.butyl-4-ethylphenol, 2-tert.Butyl-4,6-diisopropylphenol, 2,6-Dicyclopentyl-4-methylphenol, 2,6-Di-tert.-butyl-4-methoxymethylphenol, 2-tert.Butyl-4,6-dioctadecylphenol, 2,5-Di-tert.butylhydrochinon, 2,6-Di-tert.butyl-4,4-hexadecyloxyphenol, 2,2'-Methylen-bis(6-tert.butyl-4-methylphenol), 4,4'-Thio-bis-(6-tert.butyl-2-methylphenol), 3(3,5-Di-tert.butyl - 4 - hydroxyphenyl)propionsäureoctadecylester, 1,3,5 - Trimethyl - 2,4,6-tris(3',5'di-tert.butyl-4-hydroxybenzyl)benzen und/oder Pentaerythritol-tetrakis[3-(3,5-di-tert.butyl-4-hydroxyphenyl)]propionat.

Als HALS-Verbindungen sind Bis-2,2,6,6 tetramethyl-4-piperidylsebazat und/oder Poly - ([1,1 ,3,3,-tetramethylbutyl)-imino] - 1,3,5- triazin - 2,4,diyl)[2,2,6,6-tetramethyl-piperidyl)-amino]-hexamethylen-4-(2,2,6,6-tetra-methyl)piperidyl)-imino] besonders geeignet.

Als Nukleierungsmittel können in den modifizierten, Methylensequenzen enthaltenden Polymeren gegebenenfalls bevorzugt α-Nukleierungsmittel wie Talkum oder das Natriumsalz der Methylen-bis(2,4-di-tert.butylphenol)phosphorsäure oder ß-Nukleierungsmittel wie Adipinsäuredianilid, Dibenzochinacridon oder N,N'-Dicyclohexyl2,6-naphthalindicarboxamid enthalten sein.

Die in den modifizierten, Methylensequenzen enthaltenden Polymeren gegebenenfalls enthaltenen Füllstoffe sind bevorzugt Al₂O₃, Al(OH)₃, Bariumsulfat, Calciumcarbonat, Glaskugeln, Holzmehl, Kieselerde, Mikrohohlkugeln, Ruß, Talkum und/oder Wollastonit.

Die in den modifizierten, Methylensequenzen enthaltenden Polymeren gegebenenfalls enthaltenen Verstärkerstoffe sind bevorzugt Aramidfasern, Cellulosefasern, Flachs, Jute, Kenaf, Glasfasern, Glasmatten, Mikrofasern aus flüssigkristallinen Polymeren und/oder Polytetrafluorethylen-Fasern.

Als Verarbeitungshilfsmittel können in den modifizierten, Methylensequenzen enthaltenden Polymeren gegebenenfalls bevorzugt Calciumstearat, Magnesiumstearat und/oder Wachse enthalten sein.

Die bei der Herstellung der modifizierten, Methylensequenzen enthaltenden Polymeren vor dem Produktaustrag zugesetzten 3-Arylbenzofuranonderivate sind bevorzugt 5,7-Di-tert-butyl-3-(2,5-dimethylphenyl)-3H-benzofuran-2-on, 3-(3,4-Dimethylphenyl) - 5,7-di-tert-butyl-3H-benzofuran-2-on, 3-(2,3-Dimethylphenyl)-5,7-di-tert-butyl-3H-benzofuran-2-on, 5,7-Di-tert-butyl-3-(4-ethylphenyl)-3H-benzofuran-2-on, 5,7-Di-tert-butyl-3-(3-ethylphenyl)-3H-benzofuran-2-on, 5,7-Di-tert-butyl-3-(2-ethylphenyl)-3H-benzofuran-2-on, 5,7-Di-tert-butyl-3-(2,3,4,5,6-pentamethylphenyl)-3H-benzofuran-2-on, 5, 7-Di-tert-butyl-3-phenyl-3H-benzofuran-2-on, 5,7-Di-tert-butyl-3-(4-methylphenyl)-3H-benzofuran-2-on, 4,4'-Bis(5,7-di-tert-butyl-3H-benzofuran-2-on-3-yl)-N-methyldiphenylamin, 5,7-Di-tert-butyl-3-(3,5-dimethyl-4-hydroxyphenyl)-3H-benzofuran-2-on, 7-Tert-butyl-5-methyl-3-(9-methyl-9H-carbazol-3-yl)-3H-benzofuran-2-on und/oder 5,7-Di-tert-butyl-3-(9H-fluoren-3-yl)-3H-benzofuran-2-on.

Die Herstellung dieser 3-Arylbenzofuran-2-one ist bekannt [ Morvan, J., Bull.Soc. Chim. France 1979, 583; US 4 325 863; US 5 175 312]. Bekannt ist ebenfalls, diese 3-Arylbenzofuran-2-one zur Verhinderung der oxidativen und photooxidativen Alterung von Schmierölen und organischen Polymeren einzusetzen [DE 44 32 732, US 4 432 732; US 5 607 624].

Die modifizierten, Methylensequenzen enthaltenden Polymeren ohne störende Anteile an Nebenprodukten werden nach einem Verfahren durch Umsetzung von Mischungen aus
a) Methylensequenzen enthaltenden thermoplastischen Polymeren,
b) 0,005 bis 2,0 Masse%, bezogen auf die Methylensequenzen enthaltenden thermoplastischen Polymere, an Acylperoxiden, Alkylperoxiden, Hydroperoxiden, Peroxycarbonaten, Perestern, Ketonperoxiden, Peroxiketalen und/oder Azoverbindungen als thermisch zerfallende Radikalbildner,
c) gegebenenfalls 0,005 bis 5,0 Masse%, bezogen auf die Methylensequenzen enthaltenden thermoplastischen Polymeren, an mehrfunktionell ethylenisch ungesättigten Monomeren
d) und gegebenenfalls 0,01 bis 40 Masse%, bezogen auf die Methylensequenzen enthaltenden thermoplastischen Polymeren, an Zusatzstoffen
   in der Polymerschmelze bei Temperaturen von 5 bis 130°C oberhalb der Schmelzpunkte bzw. Erweichungspunkte der eingesetzten Polymeren hergestellt, wobei erfindungsgemäß nach der Modifizierung der Methylensequenzen enthaltenden Polymeren in kontinuierlichen Knetern vor dem Austrag aus den kontinuierlichen Knetern 0,01 bis 3,0 Masse%, bezogen auf die eingesetzten Polymere, an 3-Arylbenzofuranonderivaten als Radikalfänger zugesetzt werden.

Wird bei dem erfindungsgemäßen Verfahren nur ein thermoplastisches, Methylensequenzen enthaltendes Polymer eingesetzt, so wird bei der Modifizierung in Abhängigkeit von der Struktur des Methylensequenzen enthaltenden Polymers ein entsprechendes vernetztes oder strukturisomerisiertes Polymer ohne störende Anteile an Nebenprodukten erhalten. Werden bei dem erfindungsgemäßen Verfahren mehrere thermoplastische, Methylensequenzen enthaltende Polymere eingesetzt, so werden bei der Modifizierung segmentierte Polymere erhalten, die keine störenden Anteile an Nebenprodukten enthalten und die Struktursegmente der Einsatzprodukte in einem Polymermolekül enthalten.

Eine weiteres Verfahren zur Herstellung von modifizierten, Methylensequenzen enthaltenden Polymeren ohne störende Anteile an Nebenprodukten besteht in der Umsetzung von Mischungen aus
a) Methylensequenzen enthaltenden thermoplastischen Polymeren,
b) 0,005 bis 2,0 Masse%, bezogen auf die Methylensequenzen enthaltenden thermoplastischen Polymere, an Acylperoxiden, Alkylperoxiden, Hydroperoxiden, Peroxycarbonaten, Perestern, Ketonperoxiden, Peroxiketalen und/oder Azoverbindungen als thermisch zerfallende Radikalbildner,
c) 0,005 bis 50 Masse%, bezogen auf die Methylensequenzen enthaltenden thermoplastischen Polymeren, an ethylenisch ungesättigten Monomeren
d) und gegebenenfalls 0,01 bis 40 Masse%, bezogen auf die Methylensequenzen enthaltenden thermoplastischen Polymeren, an Zusatzstoffen
   in der Polymerschmelze bei Temperaturen von 5 bis 130°C oberhalb der Schmelzpunkte bzw. Erweichungspunkte der eingesetzten Polymeren, wobei erfindungsgemäß nach der Modifizierung der Methylensequenzen enthaltenden Polymeren in kontinuierlichen Knetern vor dem Austrag aus den kontinuierlichen Knetern 0,01 bis 3,0 Masse%, bezogen auf die eingesetzten Polymere, an 3-Arylbenzofuranonderivaten als Radikalfänger zugesetzt werden.

Als kontinuierliche Kneter sind für die beiden Verfahrensvarianten der Modifizierung in der Schmelze bevorzugt Extruder hoher Mischwirkung, insbesondere Doppelschneckenextruder geeignet. Der Zusatz der ethylenisch ungesättigten Monomeren, thermisch zerfallenden Radikalbildner und Zusatzstoffe kann durch Vormischen mit den thermoplastischen, Methylensequenzen enthaltenden Polymeren im Innenmischer oder nach Aufschmelzen der Polymeren direkt in die Polymerschmelze erfolgen.

Die Schmelzetemperaturen der thermoplastischen, Methylensequenzen enthaltenden Polymeren bei der Modifizierung liegen bevorzugt bei 5 bis 130°C oberhalb der Schmelzpunkte bzw. der Erweichungstemperaturen der eingesetzten Polymeren. Die eingesetzten thermisch zerfallenden Radikalbildner sollen bei der Schmelzetemperatur eine Halbwertszeit von 0,2 bis 2 Minuten besitzen. Die Verweilzeit bei der Modifizierungsreaktion liegt bei 1,5 bis 12 Minuten. Vor der Eindosierung der Radkalfänger kann eine Vacuumentgasung der modifizierten, Methylensequenzen enthaltenden Polymeren erfolgen. Die Eindosierung der 3-Arylbenzofuranonderivate als Radikalfänger vor Austrag der Polymerschmelze kann als Schmelze oder als Lösung erfolgen.

Die Polymerschmelze kann entweder direkt zu Halbzeugen wie Profilen oder Flächengebilden weiterverarbeitet werden oder nach Abkühlung und Granulierung der Schmelze zu Formkörpern weiterverarbeitet werden.

Eine weitere Verfahrensvariante zur Herstellung von modifizierten, Methylensequenzen enthaltenden Polymeren ohne störende Anteile an Nebenprodukten besteht in der Umsetzung von Mischungen aus
a) Methylensequenzen enthaltenden thermoplastischen Polymeren,
b) 0,005 bis 2,0 Masse%, bezogen auf die Methylensequenzen enthaltenden thermoplastischen Polymere, an Acylperoxiden, Alkylperoxiden, Hydroperoxiden, Peroxycarbonaten, Perestern, Ketonperoxiden, Peroxiketalen und/oder Azoverbindungen als thermisch zerfallende Radikalbildner,
c) 0,005 bis 50 Masse%, bezogen auf die Methylensequenzen enthaltenden thermoplastischen Polymeren, an ethylenisch ungesättigten Monomeren
d) und gegebenenfalls 0,01 bis 40 Masse%, bezogen auf die Methylensequenzen enthaltenden thermoplastischen Polymeren, an Zusatzstoffen
   in fester Phase bei Temperaturen von 5 bis 100°C unterhalb der Schmelzpunkte bzw. Erweichungspunkte der eingesetzten Polymeren , wobei erfindungsgemäß nach der Modifizierung der Methylensequenzen enthaltenden Polymeren in kontinuierlichen Mischern vor dem Austrag aus den kontinuierlichen Mischern 0,01 bis 3,0 Masse%, bezogen auf die eingesetzten Polymere, an 3-Arylbenzofuranonderivaten in Form von Lösungen oder Dispersionen als Radikalfänger zugesetzt werden.

Als kontinuierliche Mischer sind bevorzugt kontinuierliche Durchflußmischer geeignet. Die Herstellung der Mischungen der Reaktanden kann entweder vor Eindosierung in den kontinuierlichen Mischer in Innenmischern oder direkt im kontinuierlichen Mischer erfolgen. Die eingesetzten thermisch zerfallenden Radikalbildner sollen bei der Reaktionstemperatur eine Halbwertszeit von 0,3 bis 2 Minuten besitzen. Die Verweilzeit bei der Modifizierungsreaktion liegt bei 3 bis 30 Minuten. Bei Einsatz von leichtflüchtigen ethylenisch ungesättigten Monomeren und/oder thermisch zerfallenden Radikalbildnern kann die Herstellung der Mischungen der Reaktanden durch Sorption aus Gasphase erfolgen.

Die modifizierten, Methylensequenzen enthaltenden Polymeren sowie Mischungen mit nichtmodifizierten, thermoplastischen, Methylensequenzen enthaltenden Polymeren sind insbesondere zur Herstellung von Folien, Fasern, Platten, Beschichtungen, Rohren, Hohlkörpern, Schaumstoffen und Formteilen geeignet.

Die Erfindung wird durch nachfolgende Beispiele erläutert:

### Beispiel 1

In einen Doppelschneckenextruder Werner & Pfleiderer ZSK 30, L/D = 42, Temperaturprofil 170/205/185/170/220/210/200/170 °C, mit Inertbegasung, Vakuumentgasung und Stranggranulierung, wird ein statistisches Ethylen-Propylen-Copolymer (Ethylengehalt 4,1 Masse%, Schmelzindex 1,5 g/10 min bei 230°C/2, 16 kp), auf das 0,31 Masse % 2,6-Di-tert.butyl-4-methoxymethylphenol im Innenmischer aufgetrommelt wurde, mit 14 kg/h in den Einzugstrichter des Doppelschneckenextruders dosiert. In die Zone 4 des Extruders werden über getrennte Dosierpumpen eine 10 % Lösung von Benzoylperoxid in Aceton mit 0,36 l/h und Divinylbenzol mit 0,042 l/h dosiert. In die Zone 6 des Extruders wird eine 25% Lösung von 5,7-di-tert-butyl-3-(2,5-dimethylphenyl)-3H-benzofuran-2-on in Benzen mit 0,34 l/h dosiert.

Das resultierende modifizierte Copolymer besitzt einen IR-spektroskopisch ermittelten Anteil an gebundenem Divinylbenzen von 0,26 Masse%. Das zu Prüfkörpern verspritzte Produkt besitzt einen Schmelzindex von 2,2 g/10 min bei 230°C/2,16 kp und eine Izod-Kerbschlagzähigkeit bei -20°C von 5,8 kJ/m².

Als Vergleich besitzt ein modifiziertes Copolymer, das ohne Zusatz von 5,7-di-tert-butyl-3-(2,5-dimethylphenyl)-3H-benzofuran-2-on in die Zone 6 des Extruders hergestellt worden war, einen IR-spektroskopisch ermittelten Anteil an gebundenem Divinylbenzen von 0,27 Masse% und nach Verspritzung zu Prüfkörpern einen Schmelzindex von 7,2 g/10 min bei 230°C/2,16 kp und eine Izod-Kerbschlagzähigkeit bei -20°C von 3,9 kJ/m².

### Beispiel 2

In einen Doppelschneckenextruder nach Beispiel 1, Temperaturprofil 170/245/270/ 245/270/255/235/230 °C, wird eine 1:1 - Mischung eines Polypropylen-Homopolymers (Gehalt an Glasfasern 30 Masse%) und eines Polyamid-6,6 (Gehalt an Glasfasern 30 Masse%) mit 12 kg/Std. dosiert. In die Zone 4 des Extruders werden über getrennte Dosierpumpen eine 15 % Lösung von Dicumylperoxid in Aceton mit 0,30 l/h und eine 25%Lösung von Glycidylmethacrylat in Aceton mit 0,46 l/Std. dosiert. In die Zone 6 des Extruders wird eine 25% Lösung von 5,7-di-tert-butyl-3-(4-methylphenyl)-3H-benzofuran-2-on in Benzen mit 0,34 l/h dosiert.

Die resultierende glasfaserverstärkte Polymerlegierung besitzt einen IR-spektroskopisch ermittelten Anteil an gebundenem Glycidylmethacrylat von 0,66 Masse%. Das zu Prüfkörpern verspritzte Produkt besitzt bei Raumtemperatur eine Zugfestigkeit von 90,3 N/mm² und eine Schlagzähigkeit von 26 kJ/m².

Als Vergleich besitzt eine entsprechende glasfaserverstärkte Polymerlegierung, die ohne Zusatz von 5,7-di-tert-butyl-3-(4-methylphenyl)-3H-benzofuran-2-on in die Zone 6 des Extruders hergestellt worden war, einen IR-spektroskopisch ermittelten Anteil an gebundenem Glycidylmethacrylat von 0,68 Masse%. Das zu Prüfkörpern verspritzte Produkt besitzt bei Raumtemperatur eine Zugfestigkeit von 85,2 N/mm² und eine Schlagzähigkeit von 21 kJ/m².

### Beispiel 3

In einen auf 65°C beheizten Schneckenförderer, der mit einer Mischung aus 90 Vol% Stickstoff, 9 Vol% Vinyltrimethoxysilan und 1 Vol% Di-tert.butylperoxid begast ist, wird mit 18 kg/h eine Mischung aus 15 Masse% eines pulverförmigen Polyethylen-Homopolymers (Dichte 0,964 g/cm³, Schmelzindex 1,4 g/10 min bei 190°C/5 kp, mittlerer Partikeldurchmesser 0,08 mm) und 85 Masse% eines pulverförmigen Polypropylen-Homopolymers (Dichte 0,905 g/cm³, Schmelzindex 15 g/10 min bei 230°C/2,16 kp, mittlerer Partikeldurchmesser 0,05 mm) dosiert. Nach einer Verweilzeit von 12 min besitzt die pulverförmige Mischung einen Gehalt an Vinyltrimethoxysilan von 3,6 Masse% und von Di-tert.butylperoxid von 0,32 Masse%. Die Vinyltrimethoxysilan und Di-tert.butylperoxid enthaltende pulverförmige Polymermischung wird kontinuierlich in einen zweiten Schneckenförderer, der auf 85°C beheizt ist, überführt und zur Mischung im 3. Reaktorsegment nach einer Verweilzeit von 18 min eine 25% Lösung von 3-(2,3-dimethylphenyl)-5,7-di-tert-butyl-3H-benzofuran-2-on in Benzen mit 0,82 l/h dosiert. Die Verweilzeit der Mischung im 3. Reaktorsegment beträgt 9 Minuten. Der Gehalt der pulverförmigen modifizierten Polyolefinmischung an gebundenem Vinyltrimethoxysilan beträgt 3,4 Masse%.

Auf die pulverförmige modifizierte Polyolefinmischung wird 0,8 Masse% Dibutylzinndilaurat, 0,2 Masse% Pentaerythritol-tetrakis[3-(3,5-di-tert.butyl-4-hydroxyphenyl)]propionat, 0,2 Masse% Bis-2,2,6,6-tetramethyl-4-piperidylsebazat und 0,2 Masse% Magnesiumstearat (Hilfsstoffe jeweils bezogen auf die Summe der Polyolefine) in einem Innenmischer aufgetrommelt. Das hydrolytisch vernetzbare modifizierte Polyolefinpulver wird mit 5,8 kg/Std. in einen Werner & Pfleiderer-Extruder ZSK 30 mit Ringdüse und Abzugseinrichtung, Temperaturprofil 140/175/205/245/205/185°C, dosiert. Der abgezogene verntzte Polyolefinschlauch (Durchmesser 12 mm, Wanddicke 1 mm) besitzt einen Gelanteil von 61 Masse% und ist gegenüber einer Wärmeschockbelastung von 3 min bei 155°C ohne Verformung beständig.

Als Vergleich besitzt eine unter gleichen Herstellungsbedingungen, aber ohne Zusatz von 3-(2,3-dimethylphenyl)-5,7-di-tert-butyl-3H-benzofuran-2-on hergestellte modifizierte Polyolefinmischung einen Gehalt an gebundenem Vinyltrimethoxysilan von 3,5 Masse%. Der unter gleichen Verarbeitungsbedingungen hergestellte Polyolefinschlauch ist jedoch inhomogen und verformt sich bei einer Wärmeschockbelastung von 3 min bei 155°C.

## Patentansprüche

1. Modifizierte, Methylensequenzen enthaltende Polymere ohne störende Anteile an Nebenprodukten, die nach einem Modifizierungsverfahren aus
a) Methylensequenzen enthaltenden thermoplastischen Polymeren,
b) 0,005 bis 2,0 Masse%, bezogen auf die Methylensequenzen enthaltenden thermoplastischen Polymere, an Acylperoxiden, Alkylperoxiden, Hydroperoxiden, Peroxy/carbonaten, Perestern, Ketonperoxiden, Peroxiketalen und/oder Azoverbindungen als thermisch zerfallende Radikalbildner,
c) gegebenenfalls 0,005 bis 50 Masse%, bezogen auf die Methylensequenzen enthaltenden thermoplastischen Polymeren, an ethylenisch ungesättigten Monomeren
d) und gegebenenfalls 0,01 bis 40 Masse%, bezogen auf die Methylensequenzen enthaltenden thermoplastischen Polymeren, an Zusatzstoffen
hergestellt worden sind, dadurch gekennzeichnet, daß nach der Modifizierung der Methylensequenzen enthaltenden Polymeren in kontinuierlichen Knetern oder kontinuierlichen Mischern vor dem Austrag aus den kontinuierlichen Knetern oder kontinuierlichen Mischern 0,01 bis 3,0 Masse%, bezogen auf die eingesetzten Polymere, an 3-Arylbenzofuranonderivaten als Radikalfänger zugesetzt worden sind.

2. Modifizierte, Methylensequenzen enthaltende Polymere nach Anspruch 1, dadurch gekennzeichnet, daß die Methylensequenzen enthaltenden thermoplastischen Polymere Polyolefine, Polyvinylverbindungen, Polyvinylidenverbindungen, Polyester, Polyamide, Polyether und/oder Polyurethane sind.

3. Modifizierte, Methylensequenzen enthaltende Polymere nach Anspruch 1 und 2, dadurch gekennzeichnet, daß die Polyolefine Homo- und/oder Copolymere von α-Olefinen mit 2 bis 18 C-Atomen, bevorzugt lineare und/oder verzweigte PolyethylenHomo- und/oder -Copolymere, Cycloolefin-Ethylen-Copolymere, Polypropylen-Homopolymere, statistische Propylen-Copolymere, Propylen-Blockcopolymere, statistische Propylen-Blockcopolymere, elastomere Polypropylene, nichtisotaktische Polypropylene, isotaktisches Polybuten-1 und/oder 4-Methylpenten-1 - Homo- und/oder -Copolymere sind.

4. Modifizierte, Methylensequenzen enthaltende Polymere nach einem oder mehreren der Ansprüche 1 bis 3, dadurch gekennzeichnet, daß die ethylenisch ungesättigten Monomere 0,01 bis 50 Masse%, bezogen auf die eingesetzten Polymere, monofunktionell ethylenisch ungesättigte Monomere, bevorzugt Acrylsäure, Acrylnitril, C₄-C₂₁-Acrylsäureester, Methacrylsäure, Methacrylnitril, C₅-C₂₂-Methacrylsäureester, Styren, C₈-C₂₀-Styrenderivate, ungesättigte C₄-C₂₁-Dicarbonsäureanhydride, C₅-C₁₄-Vinylsilane, C₆-C₁₅-Acrylatsilane, Vinylpyridin, Vinyloxazolin, Isopropenyloxazolin, Vinylpyrrolidon, Amino-C₁-C₈-alkylacrylate, Amino-C₁-C₈-alkylmethacrylate, C₃-C₂ₒ-Vinylether, Hydroxy-C₁-C₈-alkylacrylate, Hydroxy-C₁-C₈-alkylmethacrylate, α-Methylstyren, Derivate des α-Methylstyrens, Vinylbiphenyl, Derivate des Vinylbiphenyls, und/oder C₂-C₂₀ -α-Olefine und/oder 0,005 bis 5 Masse%, bezogen auf die eingesetzten Polymere, mehrfunktionell ethylenisch ungesättigte Monomere, bevorzugt C₇- bis C₁₀- Divinylverbindungen, C₅- bis C₉- Allylverbindungen, C₄- bis C₁₀- Diene, C₈-C₁₄-Diacrylate, C₉-C₁₅-Dimethacrylate, C₁₂-C₁₇-Polyacrylate, C₁₅-C₂₁- Polymethacrylate, C₉-C₂₂-Bismaleinimide, C₇- bis C₁₆-Diallylverbindungen, C₉- bis C₁₂- Triallylverbindungen und/oder Makromere auf Basis von Oligobutadienen, Polysiloxanen oder Polyethern mit Acryl-, Allyl-, Isocyanat-, Oxazolin- oder Vinylendgruppen sind.

5. Modifizierte, Methylensequenzen enthaltende Polymere nach einem oder mehreren der Ansprüche 1 bis 4, dadurch gekennzeichnet, daß die Zusatzstoffe 0,01 bis 2,5 Masse% Stabilisatoren, 0,05 bis 2,0 Masse% Nukleierungsmittel, 0,1 bis 1 Masse% Antistatika, 0,2 bis 3 Masse% Pigmente, 3 bis 40 Masse% Füllstoffe, 1 bis 20 Masse% Flammschutzmittel, 3 bis 40 Masse% Verstärkerstoffe und/oder 0,01 bis 5 Masse%, jeweils bezogen auf die eingesetzten Polymere, Verarbeitungshilfsmittel sind.

6. Modifizierte, Methylensequenzen enthaltende Polymere nach einem oder mehreren der Ansprüche 1 bis 5, dadurch gekennzeichnet, daß die 3-Arylbenzofuranon-derivate 5,7-Di-tert-butyl-3-(2,5-dimethylphenyl)-3H-benzofuran-2-on, 3-(3,4-Dimethylphenyl)-5,7-di-tert-butyl-3H-benzofuran-2-on, 3-(2,3-Dimethylphenyl)-5,7-di-tert-butyl-3H-benzofuran-2-on, 5,7-Di-tert-butyl-3-(4-ethylphenyl)-3H-benzofuran-2-on, 5,7-Di-tert-butyl-3-(3-ethylphenyl)-3H-benzofuran-2-on, 5,7-Di-tert-butyl-3-(2-ethylphenyl)-3H-benzofuran-2-on, 5,7-Di-tert-butyl-3-(2,3,4,5,6-pentamethylphenyl)-3H-benzofuran-2-on, 5,7-Di-tert-butyl-3-phenyl-3H-benzofuran-2-on, 5,7-Di-tert-butyl-3-(4-methylphenyl)-3H-benzofuran-2-on, 4,4'-Bis(5,7-di-tert-butyl-3H-benzofuran-2-on-3-yl)-N-methyldiphenylamin, 5,7-Di-tert-butyl-3-(3,5-dimethyl-4-hydroxyphenyl)-3H-benzofuran-2-on, 7-Tert-butyl-5-methyl-3-(9-methyl-9H-carbazol-3-yl)-3H-benzofuran-2-on und/oder 5,7-Di-tert-butyl-3-(9H-fluoren-3-yl)-3H-benzofuran-2-on sind.

7. Verfahren zur Herstellung von modifizierten, Methylensequenzen enthaltenden Polymeren ohne störende Anteile an Nebenprodukten durch Umsetzung von Mischungen aus
a) Methylensequenzen enthaltenden thermoplastischen Polymeren,
b) 0,005 bis 2,0 Masse%, bezogen auf die Methylensequenzen enthaltenden thermoplastischen Polymere, an Acylperoxiden, Alkylperoxiden, Hydroperoxiden, Peroxycarbonaten, Perestern, Ketonperoxiden, Peroxiketalen und/oder Azoverbindungen als thermisch zerfallende Radikalbildner,
c) gegebenenfalls 0,005 bis 5,0 Masse%, bezogen auf die Methylensequenzen enthaltenden thermoplastischen Polymeren, an mehrfunktionell ethylenisch ungesättigten Monomeren
d) und gegebenenfalls 0,01 bis 40 Masse%, bezogen auf die Methylensequenzen enthaltenden thermoplastischen Polymeren, an Zusatzstoffen
in der Polymerschmelze bei Temperaturen von 5 bis 130°C oberhalb der Schmelzpunkte bzw. Erweichungspunkte der eingesetzten Polymeren, dadurch gekennzeichnet, daß nach der Modifizierung der Methylensequenzen enthaltenden Polymeren in kontinuierlichen Knetern vor dem Austrag aus den kontinuierlichen Knetern 0,01 bis 3,0 Masse%, bezogen auf die eingesetzten Polymere, an 3-Arylbenzofuranonderivaten als Radikalfänger zugesetzt werden.

8. Verfahren zur Herstellung von modifizierten, Methylensequenzen enthaltenden Polymeren ohne störende Anteile an Nebenprodukten durch Umsetzung von Mischungen aus
a) Methylensequenzen enthaltenden thermoplastischen Polymeren,
b) 0,005 bis 2,0 Masse%, bezogen auf die Methylensequenzen enthaltenden thermoplastischen Polymere, an Acylperoxiden, Alkylperoxiden, Hydroperoxiden, Peroxycarbonaten, Perestern, Ketonperoxiden, Peroxiketalen und/oder Azoverbindungen als thermisch zerfallende Radikalbildner,
c) 0,005 bis 50 Masse%, bezogen auf die Methylensequenzen enthaltenden thermoplastischen Polymeren, an ethylenisch ungesättigten Monomeren
d) und gegebenenfalls 0,01 bis 40 Masse%, bezogen auf die Methylensequenzen enthaltenden thermoplastischen Polymeren, an Zusatzstoffen
in der Polymerschmelze bei Temperaturen von 5 bis 130°C oberhalb der Schmelzpunkte bzw. Erweichungspunkte der eingesetzten Polymeren, dadurch gekennzeichnet, daß nach der Modifizierung der Methylensequenzen enthaltenden Polymeren in kontinuierlichen Knetern vor dem Austrag aus den kontinuierlichen Knetern 0,01 bis 3,0 Masse%, bezogen auf die eingesetzten Polymere, an 3-Arylbenzofuranonderivaten als Radikalfänger zugesetzt werden.

9. Verfahren zur Herstellung von modifizierten, Methylensequenzen enthaltenden Polymeren ohne störende Anteile an Nebenprodukten durch Umsetzung von Mischungen aus
a) Methylensequenzen enthaltenden thermoplastischen Polymeren,
b) 0,005 bis 2,0 Masse%, bezogen auf die Methylensequenzen enthaltenden thermoplastischen Polymere, an Acylperoxiden, Alkylperoxiden, Hydroperoxiden, Peroxycarbonaten, Perestern, Ketonperoxiden, Peroxiketalen und/oder Azoverbindungen als thermisch zerfallende Radikalbildner,
c) 0,005 bis 50 Masse%, bezogen auf die Methylensequenzen enthaltenden thermoplastischen Polymeren, an ethylenisch ungesättigten Monomeren
d) und gegebenenfalls 0,01 bis 40 Masse%, bezogen auf die Methylensequenzen enthaltenden thermoplastischen Polymeren, an Zusatzstoffen
in fester Phase bei Temperaturen von 5 bis 100°C unterhalb der Schmelzpunkte bzw. Erweichungspunkte der eingesetzten Polymeren , dadurch gekennzeichnet, daß nach der Modifizierung der Methylensequenzen enthaltenden Polymeren in kontinuierlichen Mischern vor dem Austrag aus den kontinuierlichen Mischern 0,01 bis 3,0 Masse%, bezogen auf die eingesetzten Polymere, an 3-Aryl-benzofuranonderivaten in Form von Lösungen oder Dispersionen als Radikalfänger zugesetzt werden.

10. Anwendung von modifizierten, Methylensequenzen enthaltenden Polymeren nach einem oder mehreren der Ansprüche 1 bis 6 sowie von Mischungen mit nichtmodifizierten, thermoplastischen, Methylensequenzen enthaltenden Polymeren zur Herstellung von Folien, Fasern, Platten, Beschicntungen, Rohren, Hohlkörpern, Schaumstoffen und Formteilen.
